# EUROPEAN PATENT APPLICATION

(11) **EP 0 579 373 A1**
(43) Date of publication of application: **19.01.1994**
(21) Application number: 93304445.5
(22) Date of filing: 08.06.1993
(51) Int. Cl.: G02C 5/12

(54) **Nose pad supporting member, fabrication and mounting thereof**

(30) Priority: 17.07.1992 JP 213636/92
(71) Applicant: OPTICAL Iijima INC, Takefu-shi, Fukui-ken (JP)
(72) Inventor: Iijima, Toshiko, Takefu-shi, Fukui-ken (JP)
(74) Representative: Gilmour, David Cedric Franklyn

(57) **Abstract**

The present invention relates to a nose pad supporting member, fabrication and mounting methods of the same wherein fabrication processes and mounting processes are simplified and ensure a beautiful external appearance of glasses. A nose pad supporting member is fabricated by applying a plating to a nose pad corresponding portion of a superelastic alloy nose pad arm and welding through silver solder a portion applied to the plating to a nose pad holding part on which a nose pad is mounted. Further, the nose pad supporting member is mounted on the lens frame by applying the plating to the lens frame corresponding portion of the nose pad arm and welding a portion applied to the plating to the lens frame through silver solder.

## Description

### FIELD OF INVENTION

The present invention relates to eyeglasses and, more particularly, to eyeglasses which employ a nose pad supporting member such that the nose pad is spaced away from and separate from the eyeglass frame itself. More specifically, the present invention is directed to a method for fabricating a nose pad supporting member; to a method for mounting the nose pad supporting member to the eyeglass frame; and to the nose pad supporting member itself.

### BACKGROUND

Eyeglasses are generally made up of two lens frames which are connected to each other by a bridge. Each lens frame holds a lens. A temple is mounted to each lens frame on the side opposite the bridge. The temple extends back towards the ears of the user. A nose pad supporting member is generally mounted on each lens frame, below the bridge, and holds a nose pad in place. The nose pad supporting member is constructed so as to hold the nose pad in a predetermined location with respect to the lens frame. The nose pad rests against the nose of the eyeglass wearer.

The term eyeglasses as used herein means not only conventional eyeglasses with lenses for correcting or improving vision but also other forms of glasses, such as sunglasses.

The nose pad supporting member includes a nose pad arm and a box-shaped nose pad holding part.
Conventionally, the nose pad arm is formed from a superelastic alloy which has elasticity such that the alloy returns to an original state with removal of external force. The nose pad arm sets the nose pad at a predetermined location at all times during use.

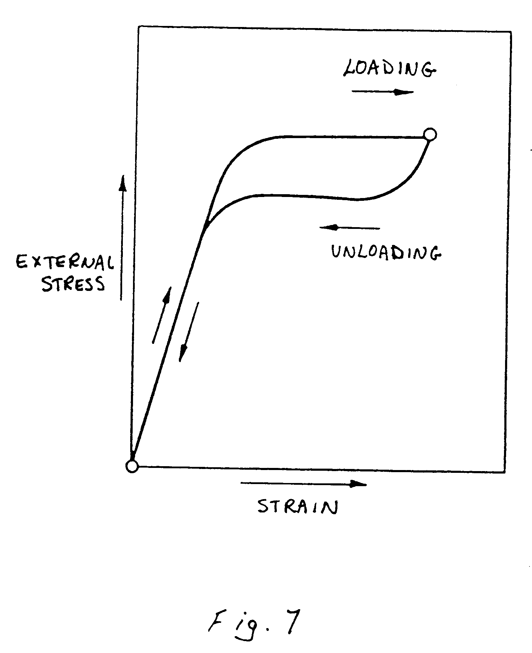

The superelastic alloys used to make the nose pad arm include those having a pseudo-elastic property as illustrated in a stress-strain characteristic curve of FIG. 7. Examples of these superelastic alloys include alloys of nickel and titanium (Ni-Ti); copper, zinc and aluminum (Cu-Zn-Al); copper, aluminum and nickel (Cu-Al-Ni); and those containing cobalt (Co).

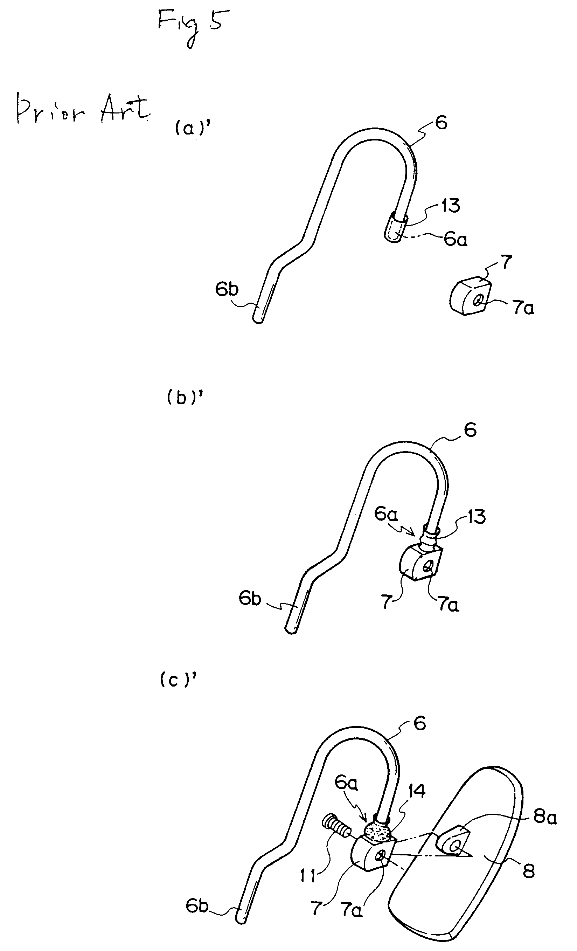

The prior art practice of fabricating a nose pad supporting member comprising mounting a nose pad holding part (not superelastic alloy) onto a nose pad arm made of a superelastic alloy is illustrated in FIGS. 5(a)-5(c). Referring to FIGS. 5(a)-5(c), a portion 6a of the superelastic alloy nose pad arm 6 corresponding to the nose pad is inserted into a pipe 13. Pipe 13 is conventionally formed with a nickel (Ni) alloy or the like. Next, the pipe 13 is caulked from the outside, thereby fixing the nose pad arm 6 to the pipe 13. Then, pipe 13 is set to the upper surface of the nose pad holding part 7, and pipe 13 and the nose pad holding part 7 are brazed using a brazing material 14 (solder).

The melted brazing material is forced to flow into a junction gap to fill the gap and join the pipe 13 to the nose pad holding part 7, the junction including only a liquid phase of the brazing material, and only the brazing material is melted without melting the host material. Typically, the brazing material is a solder comprising tin and lead.

The pipe 13 is used to mount the superelastic nose pad arm 6 onto the nose pad holding part 7 because it is difficult to directly bond a superelastic alloy to other material using a brazing material. Instead of this, the aforementioned brazing between the pipe 13 and the nose pad holding part 7 successively joins the nose pad arm 6 and the nose pad holding part 7 indirectly through the pipe 13.

The nose pad holding part 7 is mounted to the nose pad 8 as illustrated in FIG. 5(c). More specifically, a portion 8a of the nose pad 8 is inserted into the nose pad holding part 7, and thereafter the pin 11 is inserted into a mounting hole part 7a such that it passes through a hole in the portion 8a. In this way, the nose pad 8 is supported on the pin 11 and is rotatably in a predetermined range with respect to the nose pad holding part 7. Thus, the nose pad 8 is fine-adjusted and is kept stable in its mounted state.

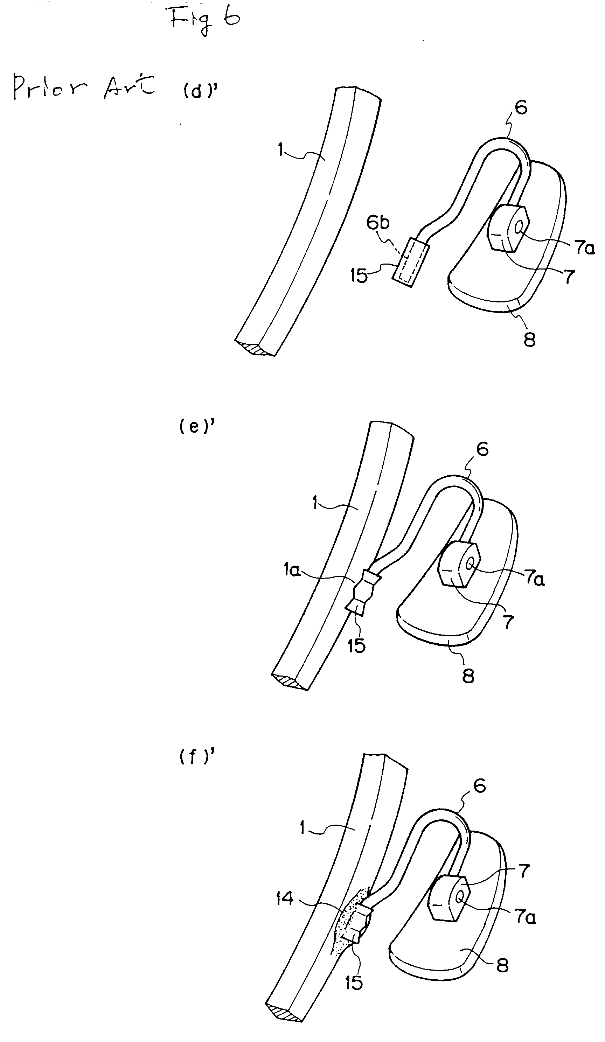

The prior art practice of mounting the nose pad supporting member on the lens frame (not superelastic alloy) is as illustrated in FIGS. 6(a)-6(c). Referring to FIGS. 6(a)-6(c), a lens frame corresponding portion 6b of the nose pad arm 6 is inserted into a nickel (Ni) alloy pipe 15. Next, the pipe 15 is caulked from the outside, thereby fixing it to the nose pad arm 6. Then, that portion of the pipe 15 is set to the mounting portion 1a of the lens frame 1. Finally, the pipe 15 and the mounting portion 1a of the lens frame 1 are brazed with the aid of a brazing material (solder) 14. In this way, the nose pad 8 is thus supported on the lens frame 1 at a predetermined location through the nose pad supporting member.

The use of pipe 15 eliminates direct brazing between the surface of the lens frame and the surface of a superelastic alloy. The brazing is done using the same quality brazing material 14 as that illustrated in FIG. 5(c).

In the prior art nose pad supporting member, as described above, the pipe 13 is interposed between the nose pad arm 6 and the nose pad holder part 7 to ensure brazing therebetween. The consequences are that a welded portion thereof is increased in its size and results in bad external appearance of the nose pad supporting member.

Further, in the prior art fabrication method of the nose pad supporting member, the pipe 13 is fixed to the nose pad corresponding portion 6a of the nose pad arm 6, and is then brazed to the nose pad holding part 7 with a brazing material (solder) 14, so that there is increased work needed to fabricate the nose pad supporting member, i.e. setting of the pipe 13 to the nose pad corresponding portion 6a and the caulking of the pipe 13 to deteriorate the production efficiency. Further, insufficient caulking of the pipe 13 can cause separation of the nose pad holding part 7 from the nose pad arm 6, and hence result in unstable joining therebetween.

In the prior art mounting method of the nose pad supporting member onto the lens frame 1, the brazable pipe 15 is placed next to the lens frame corresponding portion 6b of the nose pad arm 6 and thereafter the pipe 15 is brazed to the lens frame 1 with the brazing material (solder) 14. The prior art mounting method also suffers from difficulties that there are increased works needed to fabricate the glass frame, as in the just-mentioned fabrication method of the nose pad supporting member, and that insufficient caulking of the pipe 15 can cause separation of the nose pad arm 6 from the lens frame 1. Additionally, the large-sized welded portion on the frame presents a bad external appearance.

Further, there is known a method to join the aforementioned respective members with each other, wherein the lens frame or the nose pad holding part are formed with materials containing nickel. A connection portion between each such member and the nose pad arm is pressed, under high pressure, into a state where it is softened thermally. A common nickel component between those contained in the lens frame on the nose pad holding part and in the superelastic alloy nose pad arm is taken as a base which is in turn modified to a forged texture as its metallurgical structure. Thus, the nickel-containing members are metallurgically united.

The just-mentioned method, however, has difficulties in that it requires high technology to mount the members as well as requiring an exclusive apparatus to apply high pressure and press the members together. Hence, it provides a costly final product.

In view of the drawbacks with the prior art, it is an object of the present invention to provide a nose pad supporting member wherein a process of mounting a nose pad holding part onto a nose pad arm is simplified and a welded portion between the two is small-sized to ensure a beautiful external appearance.

It is another object of the present invention to provide a nose pad supporting member wherein a mounting process of the nose pad supporting member onto a lens frame is simplified and the external appearance thereof is improved.

### SUMMARY OF THE INVENTION

In order to achieve the above objects, a nose pad supporting member of the present invention comprises an improved superelastic alloy nose pad arm having a first plating, such as, for example, nickel plating, positioned at the nose pad corresponding portion of the superelastic alloy nose pad arm such that the nose pad corresponding portion of the nose pad arm and the nose pad holding part are welded together with use of various silver solders; and a second plating such as, for example, nickel plating positioned at the lens frame corresponding portion of the nose pad arm such that the lens frame corresponding portion of the nose pad arm and the lens frame are welded together with various silver solders.

A fabrication method of the nose pad supporting member comprises the steps of rendering a first plating to the nose pad corresponding portion of the superelastic alloy nose pad arm and welding the first plated portion to the nose pad holding part by means of a silver solder; and rendering a second plating to the lens frame corresponding portion of the nose pad arm.

Further, a mounting method of mounting the nose pad supporting member onto a lens frame according to the present invention comprises the steps of rendering a first plating to the nose pad corresponding portion of the superelastic alloy nose pad arm and welding the first plated portion to the nose pad holding part including the nose pad mounted thereon with use of silver solder, and then rendering a second plating to the lens frame corresponding portion of the nose pad arm and welding the second plated portion to the lens frame through silver solder.

In accordance with the present invention, a first plating is rendered to the nose pad corresponding portion of the superelastic alloy nose pad arm and the nose pad holding part (not superelastic alloy) is directly brazed through silver solder with a surface portion thus plated, instead of a superelastic alloy surface to which direct brazing is difficult.

Further, also in the case where the nose pad supporting member is mounted on the lens frame, a second plating is rendered to the lens frame corresponding portion of the nose pad arm, such that the lens frame corresponding portion nose pad arm and the lens frame (not superelastic alloy) are directly brazed with each other through silver solder.

It is also possible to employ either both or only one of the two plated portions of the nose pad arm. Preferably, for the best appearance, both ends of the nose pad arm are plated.

### BRIEF DESCRIPTION OF THE DRAWINGS

These and other aspects of the present invention may be more fully understood by reference to the following drawings wherein:
FIG. 1 is a perspective view illustrating a glass frame using a nose pad supporting member of the present invention;
FIG. 1(a) is an enlarged perspective view illustrating a portion labelled A in FIG. 1 where the nose pad supporting member of the present invention is employed;
FIGS. 2(a)-2(c) illustrate a fabrication method of the nose pad supporting member of the present invention;
FIGS. 3(a)-3(c) illustrate a mounting method of the nose pad supporting member of the present invention on a lens frame;
FIG. 4 is a perspective view illustrating a state of the nose pad supporting member of the present invention being mounted on the lens frame through part of the bridge;
FIGS. 5(a)-5(c) are a view illustrating a fabrication method of a prior art nose pad supporting member;
FIGS. 6(a)-6(c) are a view illustrating a prior art mounting method of the nose pad supporting member on the lens frame; and
FIG. 7 illustrates the stress-strain curve of a superelastic alloy.

### DETAILED DESCRIPTION OF INVENTION

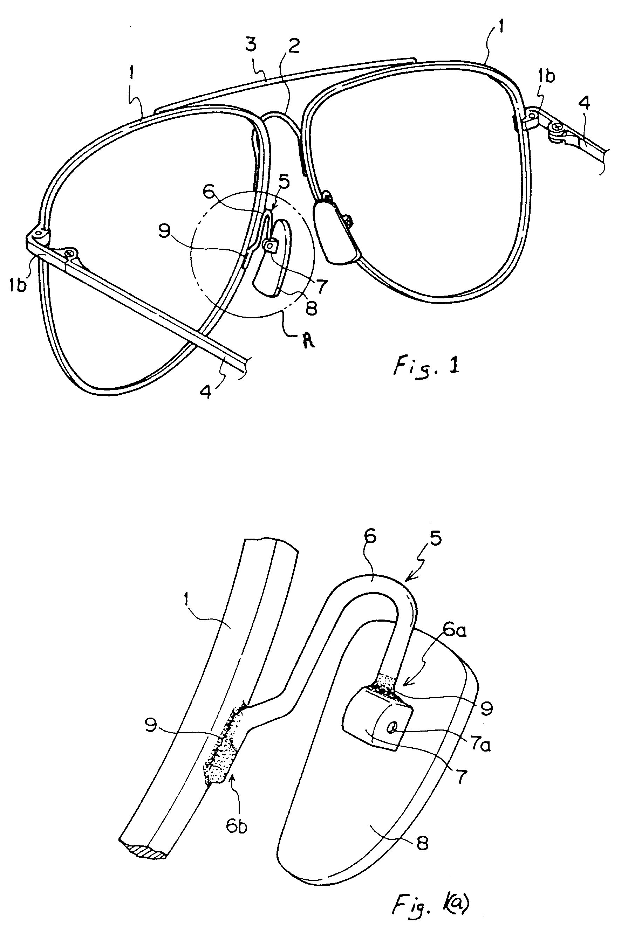

In the following, an embodiment of the present invention will be described with reference to FIGS. 1 through 4.

In the figures, designated at 1 is a lens frame, 1a is a mounting part, 1b is a temple mounting member, 2 is a lower bridge, 3 is an upper bridge, 4 is a temple, 5 is a nose pad supporting member, 6 is a nose pad arm, 6a is a nose pad corresponding portion, 6b is a lens frame corresponding portion, 7 is a nose pad holding part, 7a is a mounting hole, 8 is a nose pad, 8a is a part to be mounted, 9 is silver solder, 10 is a plated portion, 11 is a pin, 12 is a bridge, 12a is a mounting part, and 12b is an end part.

The lens frame 1 is formed with an alloy having a composition: 65% Ni-34.5% Cu-0.5% Mn, for example, or titanium (not having a pseudo-elastic property as illustrated in FIG. 7), on a side of which frame 1 the temple 4 is provided rotatably with respect to the lens frame 1 through the temple mounting member lb. Each lens frame 1 allows the lower bridge 2 and the upper bridge 3 to be welded thereto for connection with a counterpart lens frame 1.

The nose pad supporting member 5 is composed of the superelastic alloy nose pad arm 6 and of the box-shaped nose pad holding part 7 (not superelastic alloy) mounted on the nose pad corresponding portion 6a of the nose pad arm 6, the nose pad holding part 7 including the mounting hole part 7a formed therein.

The nose pad arm 6 comprises, for example, a superelastic alloy with the following composition: 1-3% cobalt (Co); 53-55% nickel (Ni); 0.2% or less carbon (C); 0.07% or less oxygen (O); and balance titanium (Ti), and is annealed (heat treated) at about 500°C to about 900°C, and formed into a predetermined shape with pressing using a substantially U-shaped die.

The annealing is done for the reason that the alloy is made easy to be bent and facilitated to be set to the die, and upon pressing the alloy is heat treated in the die at about 300°C to about 600°C for about 20 minutes to about two hours for storage of the shape thereof. The time required for the heat treatment depends upon the number of lots to be processed.

With the shape storage processing, the nose pad arm 6 is endowed with a property where even if it is bent into an arbitrary shape with external force, it returns to the previously stored shape. The nose pad arm 6 after being rendered to the shape storage processing has the following moduli:
lateral elastic modulus (G) about 2200 kgf/mm²; and longitudinal elastic modulus (E) about 5800 kgf/mm².

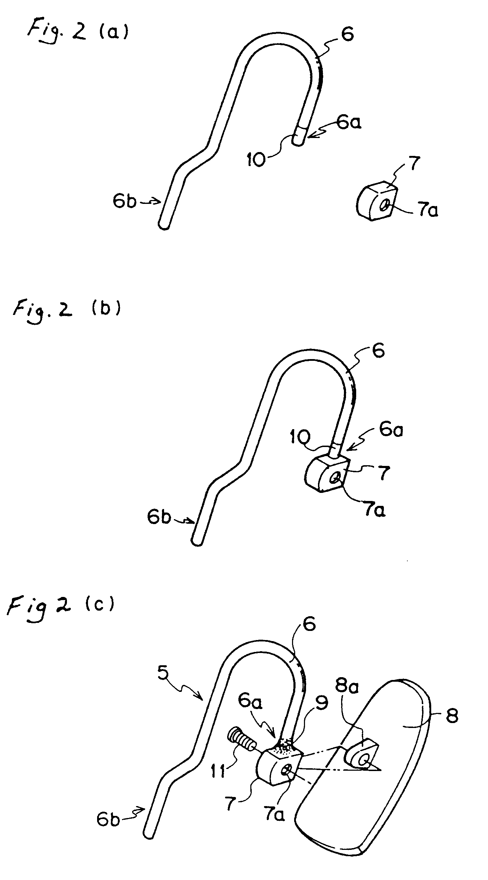

There is illustrated in FIGS. 2(a)-2(c) a method of fabricating the nose pad supporting member 5 by mounting the nose pad holding part 7 on the nose pad corresponding portion 6a of the superelastic alloy nose pad arm 6.

More specifically:
(a) nickel plating is applied to the nose pad corresponding portion 6a of the nose pad arm 6;
(b) the plated portion 10 of the nose pad corresponding portion 6a is set to the upper surface of the nose pad holding part 7; and
(c) the plated portion 10 and the nose pad holding part 7 are welded to each other through silver solder 9.

With these processes, the nose pad holding part 7 (not superelastic alloy) is mounted on the superelastic alloy nose pad arm 6 to fabricate the nose pad supporting member 5.

The plating illustrated in FIG. 2(a) is performed at about 60°C to about 65°C possessed by the nickel plating itself. About 10 to about 30 µ of a nickel plating is deposited on the plated portion 10. The plating of the nose pad arm 6 is done in a conventional manner using conventional nickel plating.

The silver solder 9 illustrated in FIG. 2(c) has the following composition, for example: 62% silver (Ag); 2% copper (Cu); 3% zinc (Zn); 3% nickel (Ni); and 30% cadmium (Cd).

As illustrated in FIG. 2(c), the mounting hole part 7a and the part 8a to be mounted are connected with each other through the pin 11 to rotatably support the nose pad 8 whereby a stable mounted state is maintained in use by a fine adjustment of the nose pad. This is the same as that in the nose pad holding part 7 in the prior art nose pad supporting member illustrated in FIG. 5(c).

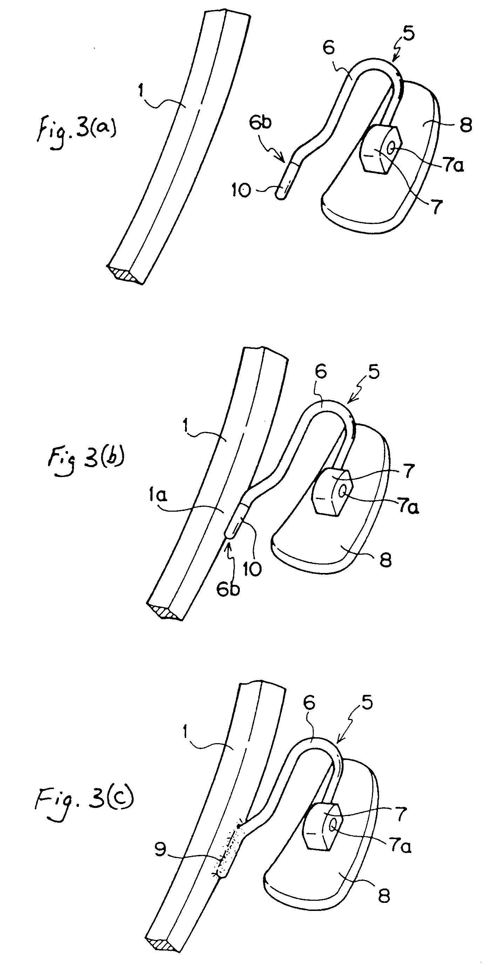

Mounting of the nose pad supporting member 5 on the lens frame 1 is performed as illustrated in FIGS. 3(a)-3(c).

More specifically:
(a) nickel plating is applied to the lens frame corresponding portion 6b of the nose pad arm 6;
(b) the plated portion 10 of the lens frame corresponding portion 6b is set to the mounting portion 1a of the lens frame 1; and
(c) the plated portion 10 and the mounting part 1a are welded to each other through the silver solder 9.

With these processes, the superelastic alloy nose pad supporting member 5 is mounted on the lens frame 1 (not superelastic alloy). The nose pad 8 is thereby supported on the lens frame 1 at a predetermined location through the nose pad supporting member 5.

It is noted that the plating in FIG. 3(a) is performed in the same manner as that illustrated in FIG. 2(a) and hence the same quality plated portion 10 is formed. Accordingly, the plating of FIG. 3(a) may be done simultaneously with the fabrication of the nose pad supporting member 5, i.e. with the plating of FIG. 2(a) or it can be done in a separate step. Further, the silver solder 9 in FIG. 3(c) can be identical in composition to the silver solder 9 illustrated in FIG. 2(c), but need not be limited thereto.

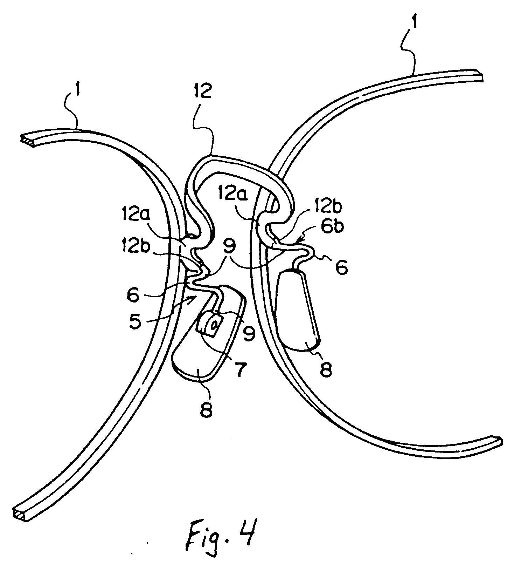

Instead of directly welding the nose pad supporting member 5 to the lens frame 1, another method may be applied as illustrated in FIG. 4 wherein the lens frame corresponding portion 6b of the nose pad arm 6 is welded to parts (end parts 12b) of the bridge 12 where both lens frames 1 are welded to the mounting parts 12a, and the nose pad supporting member 5 is supported on the lens frames 1 through the bridge 12. The welding between the lens frame corresponding portion 6b and the end part 12b is performed with the same procedure as that illustrated in FIGS. 3(b) and 3(c).

The nose pad supporting member 5 is thereupon needed to include the nose pad arm 6 configured such that it is supported on the end parts 12b to hold the nose pad 8 at a predetermined location. The formation of the nose pad arm 6 is achieved by altering the die employed in the pressing described previously. The bridge 12 illustrated in FIG. 4 is of a single type instead of the lower and upper bridges 2 and 3 illustrated in FIG. 1, but the bridge is not limited to such a single type upon mounting the nose pad supporting member 5 on the bridge.

According to the present invention, as described above, the nose pad supporting member is fabricated with the processes wherein plating is applied to the nose pad corresponding portion of the superelastic nose pad arm and thereafter the nose pad corresponding portion and the nose pad holding part are welded to each other through silver solder. Accordingly, there is eliminated the essential process of the prior art fabrication method where a pipe is inserted between the nose pad corresponding portions and caulked. Further, there is eliminated the prior art inconvenience where the caulked pipe is disconnected from the pipe and hence the nose pad holding part is separated from the nose pad arm. Thus, the fabricated nose pad supporting member also enjoys a stable joined state unlike the prior art situation, and further the welded portion is miniaturized with a beautiful external appearance.

Also in the mounting method of the nose pad supporting member on the lens frame, the lens frame corresponding portion of the nose pad arm is applied to plating and thereafter welded to the lens frame through silver solder. Thus, there is eliminated the essential process of the prior art mounting method, say, the fixing of the pipe. Further, no use is made of a pipe at the welded portion so that there is eliminated the prior art inconvenience where an otherwise caulked pipe is out of place to cause the nose pad supporting member to be separated. Thus, a stable joined state is secured and a glass frame also enjoys in itself a simple design where a pipe is removed from the lens frame.

It will be understood that the claims are intended to cover all changes and modifications of the preferred embodiments of the invention herein chosen for the purpose of illustration which do not constitute a departure from the spirit and scope of the invention.

## Claims

1. In a nose pad supporting member comprising a nose pad holding part on which a nose pad is mounted and a nose pad arm formed with a superelastic alloy for coupling said nose pad holding part and lens frames with each other, the improvement comprising said nose pad arm having a first plating positioned on the nose pad corresponding portion of the nose pad arm and said nose pad holding part being welded to the nose pad arm with silver solder.

2. A method of fabrication of a nose pad supporting member comprising the steps of:
plating that portion of the nose pad arm formed with superelastic alloy corresponding to the nose pad; and
welding said plated portion through silver solder to the nose pad holding part on which the nose pad is mounted.

3. A method of mounting a nose pad supporting member comprising the steps of:
plating that portion of a nose pad arm formed with a superelastic alloy corresponding to a nose pad;
welding said plated portion through silver solder to a nose pad holding part on which the nose pad is mounted;
plating a portion of said nose pad arm corresponding to a lens frame; and
welding said plated portion to the lens frames through silver solder.
